# EUROPEAN PATENT APPLICATION

(11) **EP 4 712 658 A1**
(43) Date of publication of application: **18.03.2026**
(21) Application number: 24806286.1
(22) Date of filing: 19.04.2024
(51) Int. Cl.: H04W 72/30

(54) **COMMUNICATION METHOD AND APPARATUS**

(30) Priority: 12.05.2023 CN 202310541096
(71) Applicant: Huawei Technologies Co., Ltd., Shenzhen, Guangdong 518129 (CN)
(72) Inventor: HU, Xingxing, Shenzhen, Guangdong 518129 (CN); SUN, Jingcong, Shenzhen, Guangdong 518129 (CN); XU, Bin, Shenzhen, Guangdong 518129 (CN)
(74) Representative: Körber, Martin Hans
(86) International application number: PCT/CN2024/088725
(87) International publication number: WO 2024/234929

(57) **Abstract**

Embodiments of this application provide a communication method and apparatus. The method includes: obtaining first configuration information; performing an application layer measurement on a first broadcast service based on the first configuration information, to obtain a measurement result; and sending the measurement result and indication information to a first network device, where the indication information indicates a first cell in which a terminal device receives the first broadcast service. According to the solutions of this application, a network device corresponding to the first cell can optimize a configuration of the first broadcast service based on the measurement result, to improve performance of the first broadcast service, and therefore improve communication quality and user experience.

## Description

This application claims priority to Chinese Patent Application No. 202310541096.1, filed with the China National Intellectual Property Administration on May 12, 2023 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

With rapid development of wireless communication technologies, some streaming-type services or voice services, such as a streaming service (streaming service), a multimedia telephony service for Internet protocol multimedia subsystem (multimedia telephony service for IP multimedia subsystem, MTSI), a multimedia broadcast multicast service (multimedia broadcast multicast service, MBMS), and a multicast broadcast service (multicast broadcast service, MBS), have increasingly high requirements on user experience.

When a terminal device initiates data services, a network side may perform quality of experience (quality of experience, QoE) measurement collection (also referred to as application layer measurement collection) configuration on the terminal device, to obtain user experience of using these services by the terminal device. However, after receiving a QoE measurement collection result reported by the terminal device, the network side cannot perform network optimization based on the QoE measurement collection result.

### SUMMARY

Embodiments of this application provide a communication method and apparatus, to perform targeted network optimization, and therefore improve communication quality and user experience.

According to a first aspect, a communication method is provided. The method is applied to a terminal device. The method may be performed by the terminal device, or may be performed by a component (for example, a chip or a circuit) of the terminal device. This is not limited. For ease of description, an example in which the method is performed by the terminal device is used below for description.

The method may include: obtaining first configuration information; performing an application layer measurement on a first broadcast service based on the first configuration information, to obtain a measurement result; and sending the measurement result and indication information to a first network device, where the indication information indicates a first cell in which the terminal device receives the first broadcast service.

According to the foregoing solution, the terminal device includes the indication information when reporting the application layer measurement result to the first network device, where the indication information indicates that the terminal device receives the first broadcast service in the first cell, so that a network device corresponding to the first cell can subsequently optimize a configuration of the first broadcast service based on the measurement result, to improve performance of the first broadcast service, and therefore improve network communication quality and user experience.

With reference to the first aspect, in some implementations of the first aspect, the measurement result includes a measurement result corresponding to at least one radio access network (radio access network, RAN)-visible application layer metric.

It should be understood that the measurement result corresponding to the at least one RAN-visible application layer metric indicates a measurement result obtained through the measurement for one or more RAN-visible application layer metrics (for example, an average throughput, a buffer level, a playout delay, or rebuffering). For example, there may be one or more measurement results. For example, the measurement result one-to-one corresponds to the RAN-visible application layer metric. Alternatively, the measurement result indicates a comprehensive measurement result for a plurality of RAN-visible application layer metrics of the first broadcast service.

With reference to the first aspect, in some implementations of the first aspect, the method further includes: sending an identifier of the first broadcast service to the first network device.

According to the foregoing solution, the identifier of the first broadcast service may indicate that the measurement result is obtained by the terminal device by performing the application layer measurement on the first broadcast service, or the first network device may determine, based on the identifier of the first broadcast service after subsequently receiving a measurement result from the terminal device, whether to send the measurement result to a second network device.

With reference to the first aspect, in some implementations of the first aspect, the method further includes: receiving second configuration information, where the second configuration information includes at least one of the following: at least one cell identity, at least one broadcast service identifier, or at least one RAN-visible application layer metric.

For example, the second configuration information is received from the network device corresponding to the first cell. For example, if the first cell is a serving cell, the terminal device receives the second configuration information from the first network device; or if the first cell is a neighboring cell, the terminal device receives the second configuration information from the second network device.

According to the foregoing solution, the terminal device receives the second configuration information from the first network device or the second network device, to perform the application layer measurement on the first broadcast service for the RAN-visible application layer metric, or determine, based on the second configuration information after receiving the measurement result from an upper layer of an application layer of the terminal device, whether to send the measurement result and the indication information to the first network device.

With reference to the first aspect, in some implementations of the first aspect, the sending the measurement result and the indication information to the first network device includes: sending the measurement result and the indication information to the first network device when the at least one broadcast service identifier carried in the second measurement configuration information includes the identifier that is of the first broadcast service and that is received by an access stratum of the terminal device from an upper layer of the access stratum of the terminal device.

According to the foregoing solution, when determining that the at least one broadcast service identifier carried in the second measurement configuration information includes the identifier of the first broadcast service, the access stratum of the terminal device sends, to the first network device, the measurement result corresponding to the RAN-visible application layer metric, so that all measurement results reported by the terminal device are needed by a network side, to avoid unnecessary signaling overheads. In addition, the network side may perform targeted optimization on a configuration of the first broadcast service based on the measurement result, to improve network optimization efficiency.

With reference to the first aspect, in some implementations of the first aspect, the sending the measurement result and the indication information to the first network device includes: sending the measurement result and the indication information to the first network device when a cell corresponding to the at least one cell identity carried in the second measurement configuration information includes the first cell.

According to the foregoing solution, when determining that the cell corresponding to the at least one cell identity carried in the second measurement configuration information includes an identity of the first cell, the access stratum of the terminal device sends, to the first network device, the measurement result corresponding to the RAN-visible application layer metric, to ensure that all the measurement results reported by the terminal device are needed by the network side, and avoid unnecessary reporting overheads. In addition, the network side may perform targeted optimization on the configuration of the first broadcast service based on the measurement result, to improve the network optimization efficiency.

With reference to the first aspect, in some implementations of the first aspect, the sending the measurement result and the indication information to the first network device includes: sending the measurement result and the indication information to the first network device when the RAN-visible application layer metric carried in the second measurement configuration information includes the RAN-visible application layer metric corresponding to the measurement result, to ensure that all the measurement results reported by the terminal device are needed by the network device.

According to the foregoing solution, when determining that the RAN-visible application layer metric carried in the second measurement configuration information includes the RAN-visible application layer metric corresponding to the measurement result, the access stratum of the terminal device sends the measurement result and the indication information to the first network device, to ensure that all the measurement results reported by the terminal device are needed by the network side, and avoid unnecessary signaling overheads. In addition, the network side may perform targeted optimization on the configuration of the first broadcast service based on the measurement result, to improve the network optimization efficiency.

With reference to the first aspect, in some implementations of the first aspect, the method further includes: receiving first information from the first network device, where the first information indicates the terminal device to modify or cancel the application layer measurement.

According to the foregoing solution, the first information is received to modify or cancel the application layer measurement, to improve flexibility of the application layer measurement, and avoid a case in which the network side expects to modify or cancel the application layer measurement but the terminal device continues to perform the unnecessary measurement because the first information is not received. This reduces unnecessary overheads.

With reference to the first aspect, in some implementations of the first aspect, the obtaining the first configuration information includes: receiving the first configuration information from the first network device or a second network device, where the first configuration information includes a RAN-visible application layer metric, and the RAN-visible application layer metric corresponds to the measurement result.

In an implementation, the first network device and the second network device may exchange RAN-visible application layer metrics that cells respectively managed by the first network device and the second network device need or expect to obtain. For example, the first network device sends, to the second network device, a RAN-visible application layer metric #1 corresponding to the serving cell; and the second network device sends, to the first network device, a RAN-visible application layer metric #2 corresponding to the neighboring cell. In this case, the first configuration information may include the RAN-visible application layer metric #1 and the RAN-visible application layer metric #2.

With reference to the first aspect, in some implementations of the first aspect, the method further includes: sending second information to the first network device, where the second information indicates that the terminal device expects to receive the first broadcast service in at least one cell, or indicates that the terminal device is receiving the first broadcast service in a second cell.

With reference to the first aspect, in some implementations of the first aspect, when the second information indicates that the terminal device expects to receive the first broadcast service in the at least one cell, the second information includes an identity of the at least one cell and/or the identifier of the first broadcast service; or when the second information indicates that the terminal device is receiving the first broadcast service in the second cell, the second information includes an identity of the second cell and/or the identifier of the first broadcast service.

According to the foregoing solution, the terminal device reports, to the first network device, that the terminal device currently expects to receive the first broadcast service in the at least one cell, or that the terminal device is receiving the first broadcast service in the second cell, so that the first network device can configure, for the terminal device in a targeted manner based on the second information, specific RAN-visible application layer metrics of the first broadcast service that are to be received in the at least one cell (or the second cell), to ensure that all RAN-visible application layer measurement results reported by the terminal device are needed by the network side.

With reference to the first aspect, in some implementations of the first aspect, the method further includes: sending third information to the first network device, where the third information indicates that the terminal device is receiving the first broadcast service in a serving cell, or indicates that the terminal device expects to receive the first broadcast service in a serving cell.

With reference to the first aspect, in some implementations of the first aspect, the third information includes the identifier of the first broadcast service and/or an identity of the serving cell.

According to the foregoing solution, for the serving cell, the terminal device reports, to the first network device, that the terminal device currently expects to receive the first broadcast service in the serving cell, or that the terminal device is receiving the first broadcast service in the serving cell, so that the first network device can start an application layer measurement in the serving cell based on the third information, for example, configures, for the terminal device, specific RAN-visible application layer metrics of the first broadcast service that are to be received in the serving cell; or cancel an application layer measurement in the serving cell. This ensures that all RAN-visible application layer measurement results reported by the terminal device are needed by the first network device, and ensures that a measurement result received by the first network device is obtained by the terminal device by performing the measurement on the first broadcast service for the RAN-visible application layer metrics in the serving cell, to help effectively perform network optimization subsequently, and improve user experience.

According to a second aspect, a communication method is provided. The method is applied to a first network device. The method may be performed by the first network device, or may be performed by a component (for example, a chip or a circuit) of the first network device. This is not limited. For ease of description, an example in which the method is performed by the first network device is used below for description.

The method may include: sending first configuration information to a terminal device; and receiving a measurement result and indication information from the terminal device, where the measurement result is obtained through an application layer measurement that is performed on a first broadcast service based on the first configuration information, and the indication information indicates a first cell in which the terminal device receives the first broadcast service.

According to the foregoing solution, the first network device further receives the indication information when receiving the application layer measurement result reported by the terminal device, where the indication information indicates that the terminal device receives the first broadcast service in the first cell, so that a network device corresponding to the first cell can subsequently perform targeted optimization on a configuration of the first broadcast service based on the measurement result, to improve performance of the first broadcast service, and therefore improve network communication quality and user experience.

With reference to the second aspect, in some implementations of the second aspect, the measurement result includes a measurement result corresponding to at least one RAN-visible application layer metric.

With reference to the second aspect, in some implementations of the second aspect, the method further includes: sending second configuration information to the terminal device, where the second configuration information includes at least one of the following: at least one cell identity, at least one broadcast service identifier, or at least one RAN-visible application layer metric.

With reference to the second aspect, in some implementations of the second aspect, the method further includes: receiving third configuration information from a second network device, where the third configuration information includes the at least one of the following: at least one cell identity, at least one broadcast service identifier, or at least one RAN-visible application layer metric; and the third configuration information is included in the second configuration information.

According to the foregoing solution, after receiving the measurement result from the terminal device, the first network device may determine, depending on whether the third configuration information includes at least one of a cell identity corresponding to the measurement result, an identifier that is of the first broadcast service and that corresponds to the measurement result, or the RAN-visible application layer metric corresponding to the measurement result, whether to send the measurement result to the second network device.

With reference to the second aspect, in some implementations of the second aspect, the measurement result is sent to the second network device when the first cell is a neighboring cell of a serving cell of the terminal device.

With reference to the second aspect, in some implementations of the second aspect, the sending the measurement result to the second network device includes: sending the measurement result to the second network device when the at least one broadcast service identifier carried in the third configuration information includes an identifier that is of the first broadcast service and that is received from the terminal device.

With reference to the second aspect, in some implementations of the second aspect, the sending the measurement result to the second network device includes: sending the measurement result to the second network device when a cell corresponding to the at least one cell identity carried in the third configuration information includes the first cell.

With reference to the second aspect, in some implementations of the second aspect, the sending the measurement result to the second network device includes: sending the measurement result to the second network device when the RAN-visible application layer metric carried in the third configuration information includes the RAN-visible application layer metric corresponding to the measurement result.

With reference to the second aspect, in some implementations of the second aspect, the method further includes: sending first information to the terminal device, where the first information indicates the terminal device to modify or cancel the application layer measurement.

With reference to the second aspect, in some implementations of the second aspect, the method further includes: receiving second information from the terminal device, where the second information indicates that the terminal device expects to receive the first broadcast service in at least one cell, or indicates that the terminal device is receiving the first broadcast service in a second cell.

With reference to the second aspect, in some implementations of the second aspect, when the second information indicates that the terminal device expects to receive the first broadcast service in the at least one cell, the second information includes an identity of the at least one cell and/or the identifier of the first broadcast service; or when the second information indicates that the terminal device is receiving the first broadcast service in the second cell, the second information includes an identity of the second cell and/or the identifier of the first broadcast service.

With reference to the second aspect, in some implementations of the second aspect, the method further includes: receiving third information from the terminal device, where the third information indicates that the terminal device is receiving the first broadcast service in the serving cell, or the third information indicates that the terminal device expects to receive the first broadcast service in the serving cell.

With reference to the second aspect, in some implementations of the second aspect, the third information includes the identifier of the first broadcast service and/or an identity of the serving cell.

For beneficial effects of the second aspect and some implementations of the second aspect, correspondingly refer to the related descriptions in the first aspect. Details are not described herein again.

According to a third aspect, a communication apparatus is provided, including: a transceiver unit, configured to obtain first configuration information; and a processing unit, configured to perform an application layer measurement on a first broadcast service based on the first configuration information, to obtain a measurement result. The transceiver unit is further configured to send the measurement result and indication information to a first network device, where the indication information indicates a first cell in which a terminal device receives the first broadcast service.

The transceiver unit may perform receiving and sending in the first aspect, and the processing unit may perform processing other than the receiving and sending in the first aspect.

According to a fourth aspect, a communication apparatus is provided, including: a transceiver unit, configured to send first configuration information to a terminal device. The transceiver unit is further configured to receive a measurement result and indication information from the terminal device, where the measurement result is obtained through an application layer measurement that is performed on a first broadcast service based on the first configuration information, and the indication information indicates a first cell in which the terminal device receives the first broadcast service.

The transceiver unit may perform receiving and sending in the second aspect, and a processing unit may perform processing other than the receiving and sending in the second aspect.

According to a fifth aspect, a communication apparatus is provided, including a processor. The processor is configured to invoke a computer program from a memory and run the computer program, to enable the communication apparatus to perform the method according to any one of the possible implementations of the first aspect or the second aspect.

Optionally, there are one or more processors.

Optionally, the communication apparatus further includes one or more memories. The memory may be integrated with the processor, or the memory and the processor may be separately disposed.

Optionally, the communication apparatus further includes a transmitter machine (transmitter) and a receiver machine (receiver).

According to a sixth aspect, a communication system is provided, including a first network device and a second network device. The first network device is configured to perform the method according to any one of the possible implementations of the second aspect.

Optionally, the communication system may further include a terminal device. The terminal device is configured to perform the method according to any one of the possible implementations of the first aspect.

According to a seventh aspect, a computer-readable storage medium is provided. The computer-readable storage medium stores a computer program or code. When the computer program or code is run on a computer, the computer is enabled to perform the method according to any one of the possible implementations of the first aspect or the second aspect.

According to an eighth aspect, a chip is provided, including at least one processor. The at least one processor is coupled to a memory. The memory is configured to store a computer program. The processor is configured to invoke the computer program from the memory and run the computer program, to enable an apparatus in which the chip system is installed to perform the method according to any one of the possible implementations of the first aspect or the second aspect.

The chip may include an input circuit or interface configured to send information or data and an output circuit or interface configured to receive information or data.

According to a ninth aspect, a computer program product is provided. The computer program product includes computer program code. When the computer program code is run by an apparatus, the apparatus is enabled to perform the method according to any one of the possible implementations of the first aspect or the second aspect.

### BRIEF DESCRIPTION OF DRAWINGS

FIG. 1 is a diagram of a network architecture;
FIG. 2 is a diagram of a wireless communication system 200 usable in embodiments of this application;
FIG. 3 is a diagram of a wireless communication system 300 usable in embodiments of this application;
FIG. 4 is a diagram of a communication method 400 according to an embodiment of this application;
FIG. 5 is a diagram of a structure of a communication apparatus 1000 according to an embodiment of this application;
FIG. 6 is a diagram of a structure of a communication apparatus 2000 according to an embodiment of this application; and
FIG. 7 is a diagram of a structure of a chip system 3000 according to an embodiment of this application.

### DESCRIPTION OF EMBODIMENTS

The following describes technical solutions in embodiments in this application with reference to the accompanying drawings.

The technical solutions in embodiments of this application may be applied to various communication systems such as a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, 5th generation (5th Generation, 5G) systems such as an NR system, or a future evolved communication system (for example, a 6G mobile communication system). The technical solutions in embodiments of this application may be applied to a vehicle-to-everything (vehicle-to-everything, V2X) scenario, an Internet of vehicles scenario, a machine type communication (machine type communication, MTC) scenario, an Internet of things (Internet of things, IoT) scenario, a long term evolution-machine (long term evolution-machine, LTE-M) scenario, a machine-to-machine (machine-to-machine, M2M) scenario, and the like.

In embodiments of this application, a terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing a user with voice/data connectivity), for example, a handheld device or a vehicle-mounted device with a wireless connection function. The terminal device in embodiments of this application may be a mobile phone, a tablet computer, a computer with a wireless transceiver function, a train, an airplane, a mobile Internet device (mobile Internet device, MID), a virtual reality (virtual reality, VR) terminal, an augmented reality (augmented reality, AR) terminal, a wireless terminal (for example, a robot) in industrial control, a wireless terminal (for example, a vehicle-mounted device, an entire vehicle device, a vehicle-mounted module, or a vehicle) in an Internet of vehicles, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, or the like. In addition, the terminal device may be further used in self-driving, telemedicine, a smart grid, transportation safety, a smart city, a smart home, and the like.

In embodiments of this application, a network device may be any device that has a wireless transceiver function and that is configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example: a NodeB (NodeB), an evolved NodeB (evolved NodeB, eNB), a next generation NodeB (next generation NodeB, gNB), or a base station device in a future evolved communication system; may be a server, a wearable device, a vehicle-mounted device, a wireless relay node, a wireless backhaul node, a transmission point (transmission point, TP), a transmission reception point (transmission reception point, TRP), or the like; may be one antenna panel or one group of antenna panels (including a plurality of antenna panels) of a base station; or may be a network node, for example, a baseband unit (Baseband unit, BBU), a central unit (central unit, CU), or a distributed unit (distributed unit, DU), included in a base station. The base station may be a macro base station, a micro base station, a relay node, a donor node, or the like, or may be a combination thereof. The base station may alternatively be a communication module, a modem, or a chip arranged in the foregoing device or apparatus. Alternatively, the base station may be a device that implements functions of a base station in a mobile switching center and device-to-device (Device-to-Device, D2D), vehicle-to-everything (vehicle-to-everything, V2X), or machine-to-machine (machine-to-machine, M2M) communication, a network side device in a 6G network, a device that implements functions of a base station in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

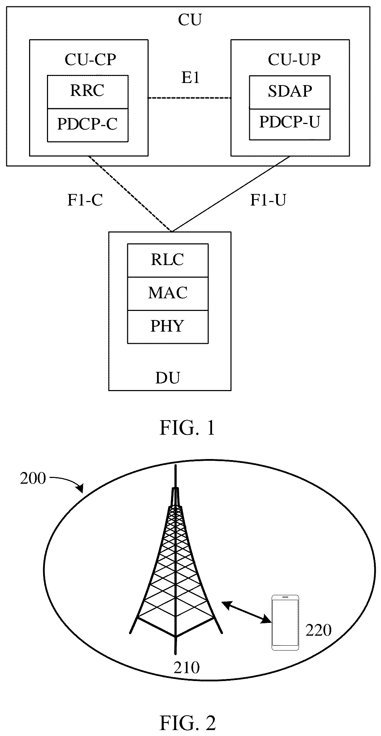

In some deployments, the network device in embodiments of this application may be a CU or a DU, or the network device includes a CU and a DU. The network device may further include an active antenna unit (active antenna unit, AAU). By way of example for description, FIG. 1 is a diagram of a CU-DU architecture. The CU implements some functions of a gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of the CU node, the DU node, or the AAU node. In addition, the CU may be categorized as a network device in an access network (radio access network, RAN), or the CU may be categorized as a network device in a core network (core network, CN). This is not limited in this application.

Further, the CU may be divided into a central unit-control plane (central unit-control plane, CU-CP) and a central unit-user plane (central unit-user plane, CU-UP). The CU-CP and the CU-UP may alternatively be deployed on different physical devices. The CU-CP is responsible for control plane functions, and mainly includes the RRC layer and a PDCP-C layer. The PDCP-C layer is mainly responsible for data encryption and decryption, integrity protection, data transmission, and the like of control plane data. The CU-UP is responsible for user plane functions, and mainly includes a service data adaptation protocol (service data adaptation protocol, SDAP) layer and a PDCP-U layer. The SDAP layer is mainly responsible for processing data in the core network and mapping a flow (flow) to a bearer. The PDCP-U layer is mainly responsible for at least one function in encryption and decryption, integrity protection, header compression, serial number maintenance, data transmission, and the like on a data plane. Specifically, the CU-CP and the CU-UP are connected through a communication interface (for example, an E1 interface). The CU-CP, on behalf of the network device, is connected to a core network device through a communication interface (for example, an Ng interface), and the CU-CP is connected to the DU through a communication interface (for example, an F1-C (control plane) interface). The CU-UP is connected to the DU through a communication interface (for example, an F1-U (user plane) interface).

It may be understood that the foregoing division of the CU and the DU into protocol layers and division of the CU-CP and the CU-UP into protocol layers are merely examples, and there may be another division manner. This is not limited. The network device in embodiments of this application may be a device including the CU or the DU, a device including the CU and the DU, or a device including the CU-control plane node (CU-CP node), the CU-user plane node (CU-UP node), and the DU node.

In different systems, the CU (including the CU-CP or the CU-UP) or the DU may have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application.

The core network device is further involved in embodiments of this application. Specifically, the core network device is a device that is in the core network (core network, CN) and that provides service support for the terminal device. The core network device may include one or more core network elements. Using a 5G core network as an example, the 5G core network includes an access and mobility management function (access and mobility management function, AMF) network element responsible for mobility management, access management, and the like, a session management function (session management function, SMF) network element responsible for session management, a user plane function (user plane function, UPF) network element responsible for data packet routing and forwarding and quality of service (quality of service, QoS) control on a user plane, a policy control function (policy control function, PCF) network element, and the like. The core network elements may operate independently, or may be combined together to implement some control functions. For example, the AMF, the SMF, and the PCF may be combined together to serve as a core network device.

It should be understood that the foregoing names are defined only for ease of distinguishing between different functions, and should not constitute any limitation on this application. This application does not exclude a possibility that other names are used in the 5G network and another future network. For example, in a 6G network, a part or all of the foregoing network elements may still use the terms in 5G, or may use other names.

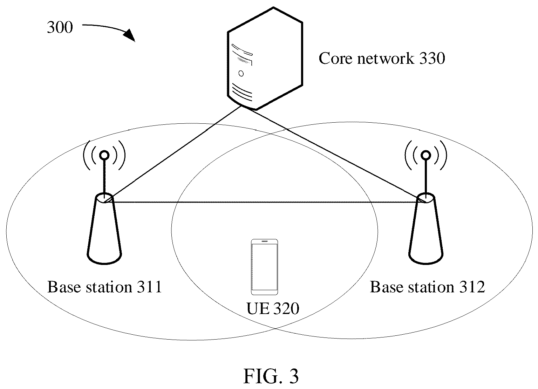

For ease of understanding of embodiments of this application, communication systems usable in embodiments of this application are described in detail below with reference to FIG. 2 and FIG. 3.

By way of example for description, FIG. 2 is a diagram of a wireless communication system 200 usable in embodiments of this application. As shown in FIG. 2, the wireless communication system 200 may include at least one network device, for example, a network device 210 shown in FIG. 2. The wireless communication system 200 may further include at least one terminal device, for example, a terminal device 220 shown in FIG. 2. A plurality of antennas may be configured for both the network device and the terminal device, and the network device and the terminal device may communicate with each other by using a multi-antenna technology.

When the network device communicates with the terminal device, the network device may manage one or more cells, and there may be one or more terminal devices in one cell. The terminal device may access the network device in at least one cell in the one or more cells, and communicate with the network device in the cell accessed by the terminal device. It should be noted that the cell may be understood as an area within coverage of a radio signal of the network device. Optionally, a single-cell communication system includes the network device 210 and the terminal device 220. Without loss of generality, a cell is denoted as a cell #1. The network device 210 may be a network device in the cell #1, in other words, the network device 210 may serve a terminal device (for example, the terminal device 220) in the cell #1.

It should be understood that FIG. 2 is merely a simplified diagram used as an example for ease of understanding. The wireless communication system 200 may further include another network device or another terminal device that is not shown in FIG. 2.

In a wireless network, one terminal device may communicate with a plurality of network devices (for example, base stations). This is dual connectivity (dual connectivity, DC), also referred to as multi-radio dual connectivity (multi-radio dual connectivity, MR-DC). The plurality of base stations may be base stations that belong to a same radio access technology (radio access technology, RAT) (for example, all are 4G base stations or 5G base stations), or may be base stations that belong to different RATs (for example, one is a 4th-generation 4G base station, and another is a 5th-generation 5G base station).

By way of example for description, FIG. 3 is another diagram of a wireless communication system 300 usable in embodiments of this application. Refer to FIG. 3. Using an example in which a terminal device is UE and a network device is a base station, UE 320 may communicate with a base station 311 and a base station 312 by using a DC technology, the base station 311 and the base station 312 both access a core network 330, and there may be a direct communication interface or an indirect communication interface between the base station 311 and the base station 312. The core network 330 may be connected to the base station 311 and the base station 312 in a wired or wireless manner. The core network 330 may be a 4G core network, or may be a 5G core network.

A network side may provide a communication service for UE by using resources of a plurality of base stations, to provide high-rate transmission for the UE. In a DC scenario, for specific UE, a base station that exchanges control plane signaling with a core network is referred to as a master node (master node, MN), and another base station is referred to as a secondary node (secondary node, SN). The MN may sometimes also be referred to as a master base station, and the SN may sometimes also be referred to as a secondary base station. The base stations have different RLC entities and different MAC entities.

It should be understood that FIG. 3 is merely a simplified diagram used as an example for ease of understanding. The wireless communication system 300 may further include another network device or another terminal device that is not shown in FIG. 3.

For some streaming-type services or voice services such as an MBS, signal quality alone cannot reflect user experience of using these services by a terminal device. An operator may know experience of the terminal device through measurement collection (for example, QoE measurement collection or application layer measurement collection), to better optimize a network to improve user experience. For example, a current serving cell does not broadcast an MBS broadcast service that the terminal device is interested in. In this case, the terminal device may receive the MBS broadcast service in a non-serving cell, and report a measurement result. However, the operator may not know a specific cell to which the MBS broadcast service specifically corresponding to the measurement result reported by the terminal device belongs, and therefore does not know for which cell a configuration of an MBS broadcast service should be optimized. Consequently, user experience cannot be improved.

For this technical problem, embodiments of this application provide a communication method and apparatus. A terminal device includes indication information when reporting an application layer measurement result, where the indication information indicates a cell in which the terminal device receives a first broadcast service, so that a network device corresponding to the first cell can subsequently optimize a configuration of the first broadcast service based on the measurement result, to improve performance of the first broadcast service, and therefore improve network communication quality and user experience.

Network optimization is performed in a targeted manner, to improve the performance of the broadcast service and user experience.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms and similar operations or steps in embodiments may be mutually referenced or explained in embodiments. This is not limited in this application.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects. "At least one of the following items (pieces)" or a similar expression thereof means any combination of these items, including a singular item (piece) or any combination of plural items (pieces). For example, at least one of a, b, and c may represent: a, b, c, a and b, a and c, b and c, or a, b, and c. Each of a, b, and c may be in a singular form or a plural form.

Third, in this application, "first", "second", and various numerical numbers indicate differentiation for ease of description, and are not for limiting the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, the terms "include", "have", and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

Fifth, in this application, "indicate" may include a direct indication and an indirect indication. When a piece of indication information indicates A, the indication information may directly indicate A or indirectly indicate A, but this does not mean that the indication information necessarily carries A.

Sixth, in this application, "sending information to XX (a device)" may be understood as that a destination of the information is the device, and may include directly or indirectly sending the information to the device. "Receiving information from XX (a device) or receiving information that is from XX (a device)" may be understood as that a source of the information is the device, and may include directly or indirectly receiving the information from the device. Information may undergo necessary processing, for example, a format change, between a source and a destination of information sending. However, the destination may understand valid information from the source.

With reference to the accompanying drawings, the following describes in detail the communication method provided in embodiments of this application. Embodiments provided in this application are applicable to any communication scenario in which a transmit-end device communicates with a receive-end device, for example, may be applied to the communication system shown in FIG. 2 or FIG. 3.

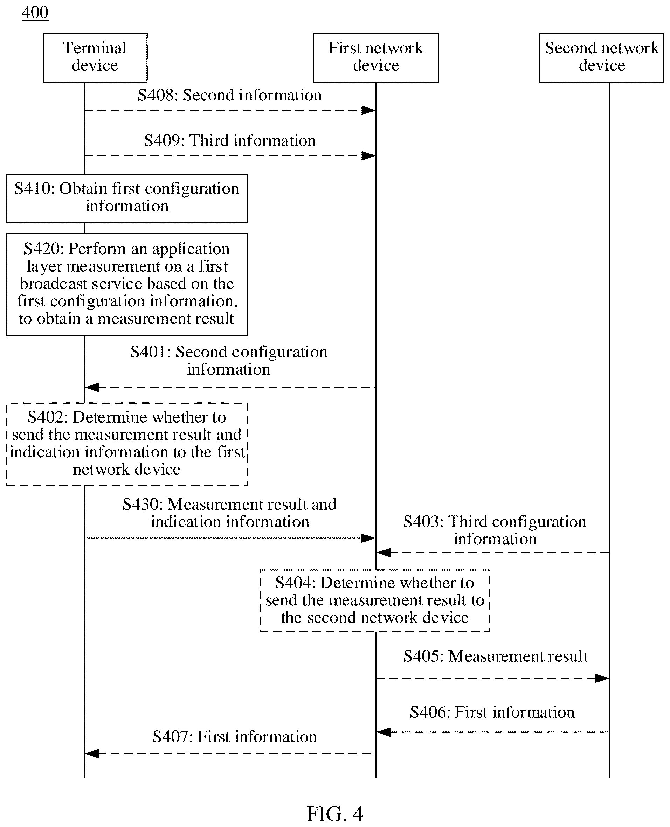

FIG. 4 is a schematic flowchart of a communication method 400 according to an embodiment of this application. A procedure for the method may be performed by a terminal device, a first network device, and a second network device, or may be performed by modules and/or components (for example, chips or integrated circuits) that are installed in the terminal device, the first network device, and the second network device and that have corresponding functions. This is not limited in this application. The following uses the terminal device, the first network device, and the second network device as execution bodies for description, and includes the following plurality of steps.

For ease of description and understanding, in the following embodiment, an example in which the terminal device is UE, the first network device is a first access network RAN device #1 (a RAN #1 for short below), and the second network device is a second access network RAN device #2 (a RAN #2 for short below) is used for description. It should be understood that when being served by one network device, the UE may obtain broadcast services provided by a plurality of cells. If carrier aggregation or dual connectivity is not configured for UE in an RRC connected (RRC_CONNECTED) state, there is only one serving cell, namely, a primary cell. If carrier aggregation or dual connectivity is configured, serving cells of the UE may include a primary cell, a primary secondary cell, and all secondary cells. In this embodiment of this application, a serving cell of the UE may be a specific cell managed by the first network device (for example, the RAN #1) that the UE currently accesses, and a neighboring cell of the serving cell of the UE may be a cell managed by the second network device (for example, the RAN #2). In this case, a cell in which the UE receives a broadcast service may include the serving cell and/or the neighboring cell of the UE.

S410: The terminal device obtains first configuration information.

For example, the UE includes an access stratum (access stratum) of the UE and an upper layer of the access stratum of the UE. The upper layer of the access stratum of the UE may be an application layer, or may be a layer configured to perform a QoE measurement (or an application layer measurement). The access stratum of the UE may be an RRC layer or another layer (for example, a PDCP layer, an RLC layer, a MAC layer, or a PHY layer) for performing an AS measurement, or may be a layer configured to perform an AS measurement. For example, the access stratum of the UE receives the first configuration information, and sends the first configuration information to the upper layer of the access stratum of the UE.

For example, the UE receives the first configuration information from a network device (for example, the RAN #1). For example, the RAN #1 may send the first configuration information to the UE by using a broadcast message or a dedicated RRC message. Specifically, the RAN #1 sends the first configuration information to the access stratum of the UE, and the access stratum of the UE sends the received first configuration information to the upper layer of the access stratum of the UE. For example, the dedicated RRC message may be an RRC release message or an RRC reconfiguration message. Similarly, the UE may alternatively receive the first configuration information from the RAN #2. For a specific implementation, refer to the related descriptions of the interaction between the UE and the RAN #1. For brevity and clear description, the following uses the interaction between the RAN #1 and the UE as an example for description.

For example, when the network device is a base station in a split architecture, a module that sends the first configuration information to the UE may be located in a CU or a CU-CP. For example, the first configuration information may be generated by the CU-CP. Correspondingly, the CU-CP sends the first configuration information to the UE.

For example, the first configuration information may include a QoE measurement configuration, and the QoE measurement configuration may also be referred to as an application layer measurement configuration.

In an implementation, the RAN #1 may further send, to the UE, at least one of the following: a service type, a RAN-visible application layer metric, a measurement periodicity, a reporting periodicity, or the like. For specific definitions, refer to related descriptions of QoE measurement collection configuration information below.

In an implementation, the RAN #1 may further send an application layer measurement identifier to the access stratum of the UE. Correspondingly, the access stratum of the UE sends the application layer measurement identifier to the upper layer of the access stratum of the UE. The application layer measurement identifier is generated by the RAN for the UE, and corresponds to the application layer measurement configuration configured by the RAN for the UE.

In an implementation, the RAN #1 may further notify the UE to report one or more application layer metrics in a RAN-perceivable or RAN-visible form (for example, in a form of an information element). Alternatively, after obtaining application layer metrics, the UE reports, to the RAN, some application layer metrics that can be currently obtained by the UE. The application layer metric may include a RAN-visible application layer metric, or may include a comprehensive score of application layer metrics, a comprehensive score of access stratum metrics, a comprehensive score obtained in combination with an application layer metric and an access stratum metric, or a metric (for example, a value may be good, medium, or poor) indicating a performance level of an application layer metric. For example, the RAN #1 sends a threshold #1 to the UE, and the UE determines, based on values of an application layer measurement result and the threshold #1, a to-be-reported indicator corresponding to a performance level of the application layer metric measurement result.

Parameters such as the service type, the RAN-visible application layer metric, the measurement periodicity, the reporting periodicity, the application layer measurement identifier, and the threshold #1 that are sent by the RAN #1 to the UE may be carried in the first configuration information, or may not be carried in the first configuration information. This is not limited in this application.

In this embodiment of this application, the RAN #1 may autonomously trigger sending of the QoE measurement configuration to the UE, or may send the QoE measurement configuration to the UE after receiving the QoE measurement collection configuration information delivered by another network device, for example, a core network device, an operation, administration, and maintenance (operation, administration, and maintenance, OAM), or an element management (element management, EM). This is not limited in this application.

In an implementation, before step S410 is performed, the method further includes: The RAN #1 receives the QoE measurement collection configuration information from a CN, the OAM, or the EM. The QoE measurement collection configuration information includes the QoE measurement configuration.

For example, the QoE measurement collection configuration information includes an application layer measurement configuration container (container), and the container includes the application layer measurement configuration. In other words, the application layer measurement configuration may be sent to the RAN #1 in a container form. In this case, the RAN #1 may not perceive or parse content in the container, and transparently transmit the container to the UE; or the RAN #1 may parse content in the container, and send the application layer measurement configuration included in the container to the UE. Alternatively, the application layer measurement configuration may be sent to the RAN #1 in a non-container form, for example, in a RAN-perceivable form.

For example, the QoE measurement collection configuration information further includes at least one of the following:
(1) QoE reference (QoE reference): identifies a QoE measurement requested by a network side, or identifies a QoE measurement collection job on an access network device (for example, the RAN #1) and a measurement collection entity (where the QoE reference may be referred to as a QoE measurement identifier). The QoE reference is a globally unique identifier, and includes a mobile country code (mobile country code, MCC), a mobile network code (mobile network code, MNC), or a QoE measurement collection identifier. The QoE measurement collection identifier is allocated by a management system or an operator, and for example, is a character string of 3 bytes. Generally, the QoE reference is allocated by the OAM or the EM. Generally, the QoE reference corresponds to the application layer measurement identifier.
(2) Service type (service type): indicates a service type, for example, a streaming service, an MTSI, or a VR service, of the QoE measurement requested by the network side.
(3) IP address of the measurement collection entity (measurement collection entity, MCE): is used by the access network device (for example, the RAN #1) to send, after the access network device receives a measurement result reported by the UE, the corresponding measurement result to the MCE based on the IP address.
(4) RAN-visible application layer metrics (available RAN visible QoE metrics): may also be referred to as RAN-visible QoE measurements. In embodiments of this application, "visible" may be replaced with "perceivable", "learnable", "detectable", or the like. RAN-visible information means that the RAN can interpret the received information. The RAN-visible application layer metric may be an application layer metric that may be obtained by the UE by performing an application layer measurement based on the application layer measurement configuration and that is perceivable to the RAN. For ease of description, the RAN-visible application layer metric is uniformly used below for specific description.

For example, the RAN-visible application layer metrics include at least one of the following metrics:
(a) Average throughput: This metric indicates a total number of bits received by the application layer of the UE in a measurement interval, for example, for a streaming service.
(b) Initial playout delay: This metric indicates an initial playout delay at the start of presentation of streaming. For example, this metric may be specifically defined as duration from a moment of obtaining a 1^{st} media segment to a moment of extracting the streaming from a client buffer.
(c) Buffer level: This metric indicates duration in which media data can be further played starting from a current playout moment.
(d) Playout delay: This metric indicates a playout delay for start-up of the streaming. For example, this metric may be specifically defined as a delay from a moment at which a dynamic adaptive streaming over hypertext transfer protocol (dynamic adaptive streaming over HTTP, DASH) player receives a play/back/start trigger to a moment of media playout.
(e) Corruption duration: This metric indicates an interval from Nepal time (Nepal Time, NPT) corresponding to a last good frame before corruption to Nepal time corresponding to a 1^{st} subsequent good frame. A good frame is a completely received frame. All parts of a picture corresponding to the frame include correct content, or the frame is a refresh frame (to be specific, does not reference any previously decoded frame) or only references a good frame that is previously decoded.
(f) Number of packets lost in succession: This metric indicates a number of real-time transport protocol (real-time transport protocol, RTP) packets lost in succession.
(g) Jitter duration: Jitter indicates that a difference between an actual playback moment and an expected playback moment of a frame exceeds a threshold. An expected playback moment of a frame is equal to a playback moment of a last played frame plus (a difference between Nepal time of the current frame and Nepal time of the last played frame).
(h) Synchronization loss duration: Synchronization loss means that an absolute time difference between a value A and another value B exceeds a specific threshold. A herein is a difference between a playback moment of a last played frame of a video stream and a playback moment of a last played frame of an audio stream. B herein is a difference between an expected playback moment of the last played frame of the video stream and an expected playback moment of the last played frame of the audio stream.
(i) Round-trip time: This metric indicates RTP-level round-trip time, plus an additional two-way delay (RTP level->speaker->microphone->RTP level) due to buffering and other processing in a client.
(j) Average codec bitrate: This metric indicates a bitrate for coding active media information during the measurement periodicity.
(k) Comparable quality viewport switching latency (comparable quality viewport switching latency): This metric reports latency and quality-related factors when viewport movement causes quality degradation. The quality-related factors include a quality ranking value (quality ranking value) and a resolution.
(l) Rebuffering: This metric indicates whether rebuffering occurs in a video stream playback process or duration of rebuffering.

(5) Minimization of drive tests (minimization of drive tests, MDT) alignment information: indicates that the application layer measurement needs to be aligned with an MDT measurement, to be specific, a correlation between an application layer measurement result and an MDT measurement result needs to be obtained. For example, a trace identifier (trace ID) of the MDT measurement is carried. The MDT measurement includes logged MDT (logged MDT) and immediate MDT (immediate MDT). The logged MDT may be for measuring strength of a received signal. The immediate MDT measurement is an MDT measurement performed by UE in an RRC connected state. The immediate MDT may be for measuring at least one of a data volume, a throughput rate, a packet transmission delay, a packet loss rate, or a processing delay of the UE.

(6) Measurement periodicity: indicates a measurement periodicity that is in the application layer measurement configuration and that is for configuring the UE to perform the application layer measurement or a measurement periodicity corresponding to the application layer measurement performed by the UE. In an implementation, when configuring a RAN-visible measurement configuration for the UE, the RAN may configure an appropriate measurement periodicity or reporting periodicity for the UE based on the measurement periodicity.

(7) Reporting periodicity: indicates a reporting periodicity that is in the application layer measurement configuration and that is for configuring the UE to perform the application layer measurement. In an implementation, when configuring a RAN-visible measurement configuration for the UE, the RAN may configure an appropriate measurement periodicity or reporting periodicity for the UE based on the measurement periodicity.

For example, the QoE measurement collection configuration information may further include indication information #1, where the indication information #1 indicates the UE to perform a QoE measurement on a broadcast service in an idle (RRC_IDLE) state or an inactive (RRC_INACTIVE) state, and/or indicates the UE to perform a QoE measurement on a broadcast service in a connected (RRC_CONNECTED) state; or the indication information #1 indicates whether the QoE measurement is a QoE measurement for a broadcast service or a QoE measurement for a multicast service. In an implementation, the network device receives the indication information #1 from another device, and sends the indication information #1 to the UE. For example, the network device sends both the first configuration information and the indication information #1 to the UE. In an example, when the indication information #1 indicates the UE to perform an application layer measurement on a multicast service, and the UE enters the RRC_IDLE state or the RRC_INACTIVE state from the RRC_CONNECTED state, the access stratum of the UE notifies the upper layer of the access stratum of the UE to release the application layer measurement.

In another implementation, before step S410 is performed, the method further includes: The RAN #2 receives the QoE measurement collection configuration information from a CN, the OAM, or the EM. The QoE measurement collection configuration information includes the QoE measurement configuration. For a specific implementation of receiving the QoE measurement collection configuration information, parameters included in the QoE measurement collection configuration information, and definitions of the parameters, refer to the related descriptions of the foregoing case in which the RAN #1 receives the QoE measurement collection configuration information from the CN, the OAM, or the EM.

In an implementation, the QoE measurement collection configuration information does not specify a specific broadcast service on which the application layer measurement is to be performed.

In another implementation, the QoE measurement collection configuration information may further include indication information #A, where the indication information #A indicates specific broadcast services on which the application layer measurement is to be performed. For example, the network device may receive the indication information #A from another device, and send the indication information #A to the UE. For example, the network device sends both the first configuration information and the indication information #A to the UE.

In this embodiment of this application, an example in which the UE performs the application layer measurement on a first broadcast service based on the first configuration information is used for description.

For RRC_CONNECTED UE, the QoE measurement configuration (namely, the first configuration information) is configured by the network side for the UE when the UE is in an RRC_CONNECTED state, or may be configured by the network side for the UE before the UE enters an RRC_IDLE/INACTIVE state last time.

For example, the first broadcast service may be a new service parallel to streaming-type services or voice services such as a streaming service or an MTSI. Alternatively, the first broadcast service may be only a communication type, and the communication type also carries a streaming-type service, a voice service, or the like. The broadcast service may be referred to as an MBS broadcast service.

In this embodiment of this application, a QoS measurement may also be referred to as the application layer measurement, and the QoE measurement includes a signaling-based QoE measurement and a management-based QoE measurement. The signaling-based QoE measurement means that the QoE measurement is UE-specific. For example, the CN sends configuration information for the signaling-based QoE measurement to the RAN #1 by using UE-level signaling between the CN and the RAN. Correspondingly, the RAN #1 sends an application layer measurement configuration to corresponding UE. For example, the RAN #1 determines, depending on whether the UE supports a QoE measurement, whether to configure the application layer measurement configuration for the UE. The management-based QoE measurement means that the QoE measurement is not UE-specific. For example, when the EM or the OAM sends configuration information for the management-based QoE measurement to the RAN, UE that is to perform the QoE measurement is not specified. Correspondingly, the RAN #1 selects, depending on whether UE currently accessing the RAN #1 supports the corresponding QoE measurement and another factor, appropriate UE to perform the QoE measurement, and sends an application layer measurement configuration to the UE after the RAN #1 selects the UE.

It should be understood that, in step S410, the application layer measurement configuration (namely, the first configuration information) sent by the RAN to the UE may be the same as or different from the QoE measurement collection configuration information received by the RAN #1 from the CN, the OAM, or the EM. For example, the application layer measurement configuration includes a part of the QoE measurement collection configuration information. For example, the application layer measurement configuration does not include the IP address that is of the MCE and that is carried in the QoE measurement collection configuration information.

S420: The terminal device performs the application layer measurement on the first broadcast service based on the first configuration information, to obtain a measurement result.

For example, the upper layer of the access stratum of the UE performs the application layer measurement based on the received application layer measurement configuration, to obtain the measurement result. The measurement result may indicate an application layer measurement result obtained when the terminal device receives the first broadcast service.

In an implementation, the measurement result includes a measurement result corresponding to at least one RAN-visible application layer metric, where the measurement result corresponding to the at least one RAN-visible application layer metric represents a measurement result obtained through the measurement for the at least one RAN-visible application layer metric. It should be understood that the measurement result may one-to-one correspond to the RAN-visible application layer metric, in other words, each RAN-visible application layer metric corresponds to one measurement result. Alternatively, the measurement result may be a comprehensive measurement result of measurement results for a plurality of RAN-visible application layer metrics. This is not specifically limited in this application.

For example, the first broadcast service is a video streaming service. If a RAN-visible application layer metric #1 is the rebuffering, the upper layer of the access stratum of the UE obtains a measurement result #1 after performing an application layer measurement, where the measurement result #1 indicates that no rebuffering occurs in a video stream playback process or duration for which rebuffering occurs in a video stream playback process is 2s. Alternatively, a value of the measurement result #1 may be 1, and indicates that user experience is good for the rebuffering of the video streaming service. Correspondingly, the network side does not need to optimize, based on the measurement result, a configuration of a broadcast service corresponding to the video streaming service. If a RAN-visible application layer metric #2 is the playout delay, the upper layer of the access stratum of the UE obtains a measurement result #2 after performing an application layer measurement, where the measurement result #2 indicates a difference between an actual playback moment and an expected playback moment of a specific frame in a video stream playback process. For example, if the actual playback moment of the frame in a video stream is a 10^{th} second, and the expected playback moment is a 5^{th} second, the upper layer of the access stratum of the UE determines, based on a threshold #2 (for example, 2s) and a difference between the playback moments, that user experience for the frame in the video stream is poor. Correspondingly, the network side needs to optimize a configuration of the video streaming service based on the measurement result. For example, the network side may allocate more resources to the UE, or improve a scheduling priority of the UE, so that the playout delay of the video stream is less than or equal to the threshold #2, to ensure good experience for the video streaming service.

In an implementation, the network side may optimize configuration information for the MBS broadcast service based on the RAN-visible measurement result. For example, the network side may optimize some configurations of the MBS broadcast service, for example, optimize time domain allocation for a downlink shared channel (pdsch-TimeDomainAllocation), a rate matching pattern (rateMatchPattern), and a modulation and coding scheme table (MCS-table).

In another implementation, the measurement result includes at least a RAN-invisible application layer measurement result. To be specific, the UE reports the application layer measurement result in a container form, and the RAN does not perceive specific content in the container. The network side obtains, based on the RAN-invisible application layer measurement result, application layer performance that the UE achieves when the UE receives the first broadcast service, so that the network side can optimize some configurations of the broadcast service.

S430: The terminal device sends the measurement result and indication information #2 to the first network device. Correspondingly, the first network device receives the measurement result and the indication information #2 from the terminal device.

The indication information #2 indicates a first cell in which the UE receives the first broadcast service.

For example, the indication information #2 is identification information of an area, and may include a cell identity, a cell index, or another representation form indicating the first cell. All the identification information falls within the protection scope of this application. Identification information of a cell includes at least one of the following information: a cell global identity (cell global identity, CGI), a physical cell identity (physical cell identity, PCI) and a radio frequency channel number, a cell identity (cell identity, cell ID), a non-public network identifier (non-public network identifier, NPN ID), a non-terrestrial network identifier (non-terrestrial network identifier, NTN ID), a tracking area code (tracking area code, TAC), or identification information (for example, a global network device identifier) of a network device to which the cell belongs.

For example, the measurement result may be reported to the RAN in the container form, or may be reported to the RAN in a non-container form. This is not limited in this application. Optionally, the UE may report, in the container form, both the RAN-invisible measurement result and the measurement result that is for the RAN-visible application layer metric and that is received from the upper layer of the access stratum of the UE. For example, the upper layer of the access stratum of the UE may separately report the RAN-invisible application layer measurement result and the measurement result for the RAN-visible application layer metric at different moments, or may report the RAN-invisible application layer measurement result and the measurement result for the RAN-visible application layer metric at a same moment.

For example, the UE sends the measurement result and the indication information #2 to the RAN by using an uplink RRC message. In an implementation, the upper layer of the access stratum of the UE sends the measurement result and the indication information #2 to the access stratum of the UE, and the access stratum of the UE reports the measurement result and the indication information #2 to the RAN. In another implementation, the upper layer of the access stratum of the UE sends the measurement result to the access stratum of the UE, the access stratum of the UE further obtains the indication information #2 corresponding to the measurement result, and then the access stratum of the UE reports the measurement result and the indication information #2 to the RAN. For example, the upper layer of the access stratum of the UE sends an identifier of the first broadcast service corresponding to the measurement result to the access stratum of the UE, and the access stratum of the UE can learn, based on the identifier of the first broadcast service, that the access stratum of the UE is currently receiving the first broadcast service in the first cell, so that the access stratum of the UE can obtain the indication information #2. For another example, the access stratum of the UE is currently receiving only the first broadcast service. Therefore, the access stratum of the UE knows a specific cell in which the first broadcast service is currently being received, and therefore obtains the indication information #2. It should be understood that the upper layer of the access stratum of the UE sends the measurement result and the indication information #2 to the access stratum of the UE by using an attention command (attention command, AT).

For example, the UE reports the measurement result to the RAN according to a rule #1 (for example, the rule #1 is included in the first configuration information). For example, the rule #1 indicates the upper layer of the access stratum of the UE to report a measurement result #a after completing application layer measurements for all the RAN-visible application layer metrics. For example, the rule #1 further indicates the UE to periodically (for example, every 1 hour) report the measurement result #a. In this case, the UE reports the measurement result #a to the RAN once at a specific interval after obtaining the measurement result #a. Alternatively, the rule #1 indicates, to the upper layer of the access stratum of the UE, that the upper layer may report, after completing the application layer measurement for the RAN-visible application layer metric #1, the measurement result #1 corresponding to the RAN-visible application layer metric #1, then perform the application layer measurement for the next RAN-visible application layer metric #2, and report, after completing the measurement, the measurement result #2 corresponding to the RAN-visible application layer metric #2. The rest can be deduced by analogy.

For example, the rule #1 indicates the upper layer of the access stratum of the UE to report the RAN-invisible application layer measurement result #a after completing the first broadcast service. Optionally, the rule #1 further indicates the UE to periodically (for example, every 1 hour) report the measurement result #a. In this case, the UE reports the measurement result #a to the RAN once at a specific interval after obtaining the measurement result #a.

In an implementation, the UE may further report an application layer measurement identifier corresponding to the measurement result.

In an implementation, the UE may further report the identifier of the first broadcast service, for example, an identifier of the video streaming service or an MBS identifier. The MBS identifier may be a temporary mobile group identity (temporary mobile group identity, TMGI), the TMGI includes a PLMN identifier and a service identifier, and the service identifier is an identifier of an MBS service in a PLMN. In this embodiment of this application, the MBS identifier may further be used as an identifier of the measurement result for the RAN-visible application layer metric.

In an implementation, when a specific application layer measurement starts, the upper layer of the access stratum of the UE may send indication information #3 to the access stratum of the UE, where the indication information #3 indicates that the application layer measurement has started. When a specific application layer measurement ends, the upper layer of the access stratum of the UE sends indication information #4 to the access stratum of the UE, where the indication information #4 indicates that the application layer measurement has ended.

It should be noted that, because of mobility of the UE, the RAN that sends the first configuration information in step S410 and a RAN that receives the measurement result in step S430 may be a same access network device (for example, the RAN #1 sends the first configuration information, and the RAN #1 receives the measurement result), or may be different RANs (for example, the RAN #1 sends the first configuration information, and the RAN #2 receives the measurement result).

In an implementation, the method further includes: The UE receives second configuration information from a RAN corresponding to the first cell, so that after completing steps S410 and S420, the UE may report, to the RAN #1 in a targeted manner based on the second configuration information and the measurement result obtained through the measurement, a measurement result corresponding to a RAN-visible application layer metric included in the second configuration information. The following provides examples for description from a perspective that the first cell is the serving cell or the neighboring cell of the UE, and includes the following steps S401 and S401'.

Optionally, the method further includes: The terminal device obtains the second configuration information.

For example, the terminal device may receive the second configuration information from the first network device, the second network device, or another network device, and the method may specifically include the following step S401 or S401'.

S401: The first network device (for example, the RAN #1) sends the second configuration information to the access stratum of the terminal device. Correspondingly, the access stratum of the terminal device receives the second configuration information from the first network device.

The second configuration information includes at least one of the following: at least one cell identity (for example, identities of the serving cell and the neighboring cell), at least one broadcast service identifier (for example, an identifier of a broadcast service corresponding to a video streaming service #1 and an identifier of a broadcast service corresponding to an audio streaming service #1), or at least one RAN-visible application layer metric (for example, the rebuffering and the playout delay).

In an implementation, the RAN #1 may send the application layer measurement configuration (namely, the first configuration information in step S410) and the second configuration information to the access stratum of the UE by using one RRC message. In this case, a parameter in the second configuration information may alternatively be carried in the first configuration information, or the first configuration information and the second configuration information are independently included in the RRC message. Alternatively, the RAN #1 may send the application layer measurement configuration and the second configuration information to the access stratum of the UE by using different RRC messages. For example, the RAN #1 first sends the application layer measurement configuration, and then sends the second configuration information. This is not limited in this application.

For example, the UE obtains the first configuration information and the second configuration information from a same cell (for example, the serving cell) managed by the RAN #1.

In another implementation, the following step S401' is performed.

S401': The second network device (for example, the RAN #2) sends the second configuration information to the access stratum of the terminal device. Correspondingly, the access stratum of the terminal device receives the second configuration information from the second network device. For a specific implementation and a meaning of the second configuration information, refer to the related descriptions in step S401.

In an implementation, the UE receives the second configuration information from a cell corresponding to a neighboring base station in the RAN #2 (this may be understood as that this neighboring cell is included in the first cell). For example, a configuration that is of the MBS broadcast service and that is sent by the neighboring cell in the RAN #2 includes the second configuration information. In this implementation, the second configuration information may not carry a cell identity (namely, an identity of the neighboring cell), and may carry at least one of the following: at least one broadcast service identifier (for example, an identifier of a broadcast service corresponding to a video streaming service #1 and an identifier of a broadcast service corresponding to an audio streaming service #1) or at least one RAN-visible application layer metric (for example, the rebuffering and the playout delay).

In another implementation, the second configuration information may include indication information #5, where the indication information #5 indicates that the first cell expects or needs to obtain a RAN-visible application layer metric, but does not specify a specific RAN-visible application layer metric.

In an implementation, before step S430 is performed, the method further includes the following step S402:
S402: The access stratum of the terminal device determines whether to send the measurement result and the indication information #2 to the first network device.

For example, the access stratum of the UE determines, based on the second configuration information received in step S401 and the measurement result received in step S420, whether to send the measurement result and the indication information #2 to the RAN #1.

The following describes examples of an implementation in which the UE determines to send the measurement result and the indication information #2 to the RAN #1.

Manner 1: The measurement result and the indication information #2 are sent to the RAN #1 when the at least one broadcast service identifier carried in the second measurement configuration information includes the identifier that is of the first broadcast service and that is received by the access stratum of the UE from the upper layer of the access stratum of the UE.

For example, assuming that the at least one broadcast service identifier carried in the second configuration information includes the identifier of the broadcast service corresponding to the video streaming service #1 and the identifier of the broadcast service corresponding to the audio streaming service #1, and the identifier that is of the first broadcast service and that is received by the access stratum of the UE from the upper layer of the access stratum of the UE is the identifier of the broadcast service corresponding to the video streaming service #1, the access stratum of the UE determines to send the measurement result and the indication information #2 to the RAN #1, in other words, to perform step S430. On the contrary, if the identifier that is of the first broadcast service and that is received by the access stratum of the UE from the upper layer of the access stratum of the UE is an identifier of a broadcast service corresponding to a video streaming service #2, the access stratum of the UE determines not to send the measurement result and the indication information #2 to the RAN #1, in other words, not to perform step S430.

Manner 2: The measurement result and the indication information #2 are sent to the RAN #1 when a cell corresponding to the at least one cell identity carried in the second configuration information includes the first cell.

For example, assuming that the at least one cell identity carried in the second configuration information includes a cell identity #1 and a cell identity #2, and the first cell in which the upper layer of the access stratum of the UE receives the first broadcast service is a cell corresponding to the cell identity #1, the access stratum of the UE determines to send the measurement result and the indication information #2 to the RAN #1, in other words, to perform step S430. On the contrary, if the first cell in which the upper layer of the access stratum of the UE receives the first broadcast service is a cell other than cells corresponding to the cell identity #1 and the cell identity #2, the access stratum of the UE determines not to send the measurement result and the indication information #2 to the RAN #1, in other words, not to perform step S430.

Manner 3: The measurement result and the indication information #2 are sent to the RAN #1 when the RAN-visible application layer metric carried in the second measurement configuration information includes the RAN-visible application layer metric corresponding to the measurement result.

For example, assuming that the RAN-visible application layer metrics carried in the second configuration information include the rebuffering and the playout delay, and the RAN-visible application layer metric corresponding to the measurement result received by the access stratum of the UE from the upper layer of the access stratum of the UE is the rebuffering, the access stratum of the UE determines to send the measurement result and the indication information #2 to the RAN #1, in other words, to perform step S430. On the contrary, if the RAN-visible application layer metric corresponding to the measurement result received by the access stratum of the UE from the upper layer of the access stratum of the UE is the average throughput, the access stratum of the UE determines not to send the measurement result and the indication information #2 to the RAN #1, in other words, not to perform step S430.

Manner 4: A RAN device (for example, the RAN #2) corresponding to a cell in which the UE is currently receiving the first broadcast service sends second configuration information, that is, refer to the descriptions in step S401'. For example, assuming that the second configuration information carries indication information #5, the access stratum of the UE determines to send the measurement result and the indication information #2 to the RAN #1, in other words, to perform step S430. On the contrary, if the second configuration information does not carry indication information #5, the access stratum of the UE determines not to send the measurement result and the indication information #2 to the RAN #1, in other words, not to perform step S430.

It should be understood that the foregoing implementations are merely examples provided for ease of understanding, and do not constitute any limitation on the technical solutions of this application. The foregoing implementations may be independently implemented, or may be implemented in combination. For example, when determining that a plurality of the foregoing implementations are met (for example, both the manner 1 and the manner 2 are met, both the manner 1 and the manner 3 are met, or all the manner 1, the manner 2, and the manner 3 are met), the access stratum of the UE sends the measurement result and the indication information #2 to the RAN #1. This is not limited in this application.

For example, assuming that the at least one broadcast service identifier carried in the second configuration information includes the identifier of the broadcast service corresponding to the video streaming service #1 and the identifier of the broadcast service corresponding to the audio streaming service #1, the at least one cell identity includes the cell #1 and the cell identity #2, and the at least one RAN-visible application layer metric includes the rebuffering and the playout delay, if the identifier that is of the first broadcast service and that is received by the access stratum of the UE from the upper layer of the access stratum of the UE is the identifier of the broadcast service corresponding to the video streaming service #1, the RAN-visible application layer metric corresponding to the measurement result is the rebuffering, and the first cell in which the upper layer of the access stratum of the UE receives the first broadcast service is the cell corresponding to the cell identity #1, the access stratum of the UE determines to send the measurement result and the indication information #2 to the RAN #1, in other words, to perform step S430.

In an implementation, the first network device (for example, the RAN #1) and the second network device (for example, the RAN #2) may exchange RAN-visible application layer metrics, of the first broadcast service, that cells respectively managed by the first network device and the second network device need or expect to obtain. Specifically, the method includes the following steps S403 and S403'. In step S403, the RAN #2 sends an application layer measurement configuration (namely, third configuration information) to the RAN #1. In step S403', the RAN #1 sends an application layer measurement configuration (namely, fourth configuration information) to the RAN #2.

S403: The second network device sends the third configuration information to the first network device. Correspondingly, the first network device receives the third configuration information from the second network device.

It should be understood that a communication interface, for example, an Xn interface or an NB interface, is established between the RAN #1 and the RAN #2.

The third configuration information includes at least one of the following: at least one cell identity (for example, the identity of the neighboring cell), at least one broadcast service identifier (for example, the identifier of the broadcast service corresponding to the video streaming service #1), or at least one RAN-visible application layer metric (for example, the rebuffering). For example, the third configuration information indicates rebuffering that is of the broadcast service corresponding to the video streaming service #1 and that is expected to be obtained by the cell (namely, the neighboring cell of the serving cell of the UE) managed by the RAN #2.

For example, a DU of the RAN #2 sends, to a CU, at least one of the broadcast service identifier (for example, the identifier of the broadcast service corresponding to the video streaming service #1) or the RAN-visible application layer metric (for example, the rebuffering), to indicate which RAN-visible application layer metrics of which broadcast services are expected to be obtained by the DU. Further, the cell identity is sent to indicate which cells need or expect to obtain the foregoing information, so that a CU of the RAN #1 can learn of the third configuration information.

S403': The first network device sends the fourth configuration information to the second network device. Correspondingly, the second network device receives the fourth configuration information from the first network device.

The fourth configuration information includes at least one of the following: at least one cell identity (for example, the identity of the serving cell), at least one broadcast service identifier (for example, the identifier of the broadcast service corresponding to the audio streaming service #1), or at least one RAN-visible application layer metric (for example, the playout delay).

For example, a DU of the RAN #1 sends, to the CU, at least one of the broadcast service identifier (for example, the identifier of the broadcast service corresponding to the video streaming service #1) or the RAN-visible application layer metric (for example, the rebuffering), to indicate which RAN-visible application layer metrics of which broadcast services are needed or expected to be obtained by the DU. Further, the cell identity is sent to indicate which cells need or expect to obtain the foregoing information, so that the CU of the RAN #2 can learn of the fourth configuration information.

For example, a DU of the RAN #1 sends, to the CU, the broadcast service identifier (for example, the identifier of the broadcast service corresponding to the audio streaming service #1) and the RAN-visible application layer metric (for example, the playout delay), to indicate rebuffering that is of the broadcast service corresponding to the audio streaming service #1 and that is expected to be obtained by the DU.

For example, the third configuration information and/or the fourth configuration information in steps S403 and S403' may be included in the second configuration information, or may not be included in the second configuration information. This is not limited in this application.

It should be noted that the foregoing steps may be extended to exchanging of third configuration information and fourth configuration information between any other two RANs, so that the RAN may send second configuration information to other UE.

It should be noted that the third configuration information and the fourth configuration information in the foregoing steps may not be included in the second configuration information. For example, the RAN #1 and the RAN #2 exchange the third configuration information and the fourth configuration information, the RAN #2 sends the third configuration information to the RAN #1, and the RAN #1 sends the fourth configuration information to the RAN #2.

In an implementation, after step S430 is performed, the method further includes the following step S404:
S404: The first network device determines whether to send the measurement result to the second network device.

For example, the RAN #1 determines, based on the measurement result received in step S430 and the third configuration information received in step S403, whether to send the measurement result to the RAN #2.

The following describes examples of an implementation in which the RAN #1 determines to send the measurement result to the RAN #2.

Manner 1: The measurement result is sent to the RAN #2 when the at least one broadcast service identifier carried in the third configuration information includes the identifier that is of the first broadcast service and that is received from the UE.

For example, assuming that the at least one broadcast service identifier carried in the third configuration information is the identifier of the broadcast service corresponding to the video streaming service #1, and the identifier that is of the first broadcast service and that is received by the RAN #1 from the UE is the identifier of the broadcast service corresponding to the video streaming service #1, the RAN #1 determines to send the measurement result to the RAN #2, in other words, to perform the following step S405. On the contrary, if the at least one broadcast service identifier carried in the third configuration information is the identifier of the broadcast service corresponding to the video streaming service #2, or if the identifier that is of the first broadcast service and that is received by the RAN #1 from the UE is the identifier of the broadcast service corresponding to the audio streaming service #1, the RAN #1 determines not to send the measurement result to the RAN #2, in other words, not to perform the following step S405.

Manner 2: The measurement result is sent to the RAN #2 when a cell corresponding to the at least one cell identity carried in the third configuration information includes the first cell.

For example, assuming that the indication information #2 received by the RAN #1 from the UE indicates that the first cell in which the UE receives the first broadcast service is a neighboring cell #1, and the at least one cell identity carried in the third configuration information is an identity of the neighboring cell #1, the RAN #1 determines to send the measurement result to the RAN #2, in other words, to perform the following step S405. On the contrary, if the indication information #2 indicates that a cell corresponding to the at least one cell identity carried in the third configuration information does not include the first cell in which the UE receives the first broadcast service, the RAN #1 determines not to send the measurement result to the RAN #2, in other words, not to perform the following step S405.

Manner 3: The measurement result is sent to the RAN #2 when the RAN-visible application layer metric carried in the third configuration information includes the RAN-visible application layer metric corresponding to the measurement result.

For example, assuming that the RAN-visible application layer metric corresponding to the measurement result received by the RAN #1 from the UE is the rebuffering, and the at least one RAN-visible application layer metric carried in the third configuration information is the rebuffering, the RAN #2 determines to send the measurement result to the RAN #2, in other words, to perform the following step S405. On the contrary, if the RAN-visible application layer metric corresponding to the measurement result received by the RAN #1 from the UE is the playout delay, the RAN #1 determines not to send the measurement result to the RAN #2, in other words, not to perform the following step S405.

It should be understood that the foregoing three implementations are merely examples provided for ease of understanding, and do not constitute any limitation on the technical solutions of this application. The foregoing implementations may be independently implemented, or may be implemented in combination. For example, when determining that a plurality of the foregoing implementations are met (for example, both the manner 1 and the manner 2 are met, both the manner 1 and the manner 3 are met, or all the manner 1, the manner 2, and the manner 3 are met), the RAN #1 sends the measurement result to the RAN #2. This is not limited in this application.

For example, assuming that the at least one broadcast service identifier carried in the third configuration information includes the identifier of the broadcast service corresponding to the video streaming service #1, the at least one cell identity includes the identity of the neighboring cell #1, and the at least one RAN-visible application layer metric includes the rebuffering, if the identifier that is of the first broadcast service and that is received by the RAN #1 from the UE is the identifier of the broadcast service corresponding to the video streaming service #1, the RAN-visible application layer metric corresponding to the measurement result is the rebuffering, and the first cell in which the upper layer of the access stratum of the UE receives the first broadcast service is the neighboring cell #1, the RAN #1 determines to send the measurement result to the RAN #2, in other words, to perform the following step S405.

According to step S404, when determining that one or more of the foregoing three manners are met, the RAN #1 may send the measurement result to the RAN #2, in other words, perform step S405.

It should be noted that, in the foregoing example, in step S410, the RAN #2 may send the first configuration information to the UE; and in step S403, the RAN #2 may send the third configuration information to the RAN #1. In this case, in step S404, the RAN #1 may determine, based on the measurement result received in step S430 and the third configuration information received in step S403, whether to send the measurement result to the RAN #2. Further, if the RAN #1 determines to send the measurement result to the RAN #2 in step 404, the measurement result is sent to the RAN #2, in other words, S405 is performed. In other words, in this implementation, the RAN that delivers the first configuration information and a RAN that receives the measurement result are the same, for example, are the RAN #2. In another implementation, the RAN #2 delivers the first configuration information to the UE. After the RAN #1 receives the measurement result and the indication information #2 from the UE, if the indication information #2 indicates that the UE receives the first broadcast service in a cell (namely, the first cell) managed by a RAN #3, the RAN #1 forwards the measurement result to the RAN #3 based on the indication information #2. In other words, in this implementation, the RAN that delivers the first configuration information, the RAN that receives the measurement result, and the RAN corresponding to the cell (namely, the first cell) in which the terminal device receives the broadcast service are not a same network device. In other words, the RAN #3 and the RAN #2 or the RAN #1 may be a same network device, or may be different network devices. This is not limited in this application.

S405: The first network device sends the measurement result to the second network device. Correspondingly, the second network device receives the measurement result from the first network device.

In an implementation, the RAN #1 may further send the indication information #2 to the RAN #2, where the indication information #2 indicates the first cell. For example, the indication information #2 may include an identity of the first cell.

In an implementation, when the RAN #2 expects to modify or cancel the application layer measurement, the method further includes the following steps S406 and S407. Modifying the application layer measurement configuration may be understood as adding or deleting a broadcast service or a RAN-visible application layer metric, changing the measurement periodicity, changing the reporting periodicity, or the like. In this case, the RAN #1 may indicate, based on a requirement of the RAN #2, the UE to perform the application layer measurement.

S406: The second network device sends first information to the first network device. Correspondingly, the first network device receives the first information from the second network device.

S407: The first network device sends the first information to the access stratum of the terminal device. Correspondingly, the access stratum of the terminal device receives the first information from the first network device.

The first information indicates the terminal device to modify or cancel the application layer measurement. Optionally, the first information further carries a cell identity, where the cell identity indicates specific cells whose application layer measurements are to be modified or canceled. The first information may be carried in the second configuration information.

In an implementation, the application layer measurement that the RAN #2 expects to modify or cancel may be an application layer measurement corresponding to the third configuration information in step S403. In other words, step S403 may coexist with S406 and S407, that is, step S403 is performed first, and then steps S406 and S407 are performed.

For example, when the first information indicates the UE to modify the application layer measurement, for example, indicates at least one of an identifier or a RAN-visible application layer metric of a new broadcast service on which a measurement needs to be performed, for example, if the first information includes the identifier, rebuffering, and a playout delay of the broadcast service corresponding to the video streaming service #2, based on the third configuration information in step S403 (for example, the third configuration information indicates the upper layer of the access stratum of the UE to receive, in the neighboring cell managed by the RAN #2, the broadcast service corresponding to the video streaming service #1, and perform a measurement for the rebuffering of the broadcast service corresponding to the video streaming service #1), it may indicate that a service type expected by the RAN #2 is changed from the broadcast service corresponding to the video streaming service #1 to the broadcast service corresponding to the video streaming service #2, and the playout delay is added to the corresponding RAN-visible application layer metric. In this case, the upper layer of the access stratum of the UE receives, in the neighboring cell managed by the RAN #2, the broadcast service corresponding to the video streaming service #2, performs an application layer measurement for the rebuffering and the playout delay of the broadcast service corresponding to the video streaming service #2, and reports an obtained measurement result and the identity of the neighboring cell to the RAN #1. The RAN #1 forwards the measurement result to the RAN #2. The measurement result may include a measurement result #1 corresponding to the rebuffering and a measurement result #2 corresponding to the playout delay, and/or include a total measurement result #3 corresponding to the rebuffering and the playout delay.

For example, when the first information indicates the UE to cancel the application layer measurement, based on the third configuration information in step S403, it may indicate that the upper layer of the access stratum of the UE does not need to perform the application layer measurement for the rebuffering of the broadcast service corresponding to the video streaming service #1 in the neighboring cell managed by the RAN #2. Correspondingly, the RAN #1 does not need to send a measurement result to the RAN #2.

In another implementation, step S403 may not be performed, that is, steps S406 and S407 may be independently implemented.

Optionally, before or after step S410 is performed, the method further includes: The UE may report, to the RAN #1, that the UE is currently receiving a broadcast service #1 in a cell #1, so that the RAN #1 can configure, for the UE, at least one RAN-visible application layer metric corresponding to the broadcast service #1 in the cell #1, to ensure that all application layer measurement results reported by the UE are needed by the RAN #1, in other words, the following step S408 is performed.

S408: The terminal device sends second information to the first network device. Correspondingly, the first network device receives the second information from the terminal device.

The second information indicates that the UE expects to receive or is receiving the first broadcast service in at least one cell. Optionally, the second information includes an identity of the at least one cell and/or the identifier of the first broadcast service. Alternatively, the second information indicates that the UE is receiving the first broadcast service in a second cell. Optionally, the second information includes an identity of the second cell and/or the identifier of the first broadcast service. The identity of the at least one cell may include the identity of the serving cell or an identity of another cell. For example, the at least one cell may be the serving cell of the UE and/or a neighboring cell of the serving cell of the UE, and the second cell may be the serving cell of the UE and/or a neighboring cell of the serving cell of the UE. This is not limited in this application.

For example, the second information indicates that the UE is receiving the first broadcast service, for example, the broadcast service corresponding to the video streaming service #1, in the cell #1 (for example, the cell managed by the RAN #2), and the second information includes an identity of the cell #1 and/or the identifier of the broadcast service corresponding to the video streaming service #1. Correspondingly, the RAN #1 obtains the third configuration information from the RAN #2, the RAN #1 learns of, based on the third configuration information, the RAN-visible application layer metric that the RAN #2 expects to receive, and then the RAN #1 sends the RAN-visible application layer metric to the access stratum of the UE. The upper layer of the access stratum of the UE performs a measurement for the rebuffering of the broadcast service corresponding to the video streaming service #1 in the neighboring cell. Alternatively, the RAN #1 obtains the third configuration information from the RAN #2, the RAN #1 learns of, based on the third configuration information, the RAN-visible application layer metric that the RAN #2 expects to receive, and then the RAN #1 sends the second configuration information to the access stratum of the UE. The UE determines whether to report the measurement result. Alternatively, the RAN #1 forwards the second information to the RAN #2, where the second information indicates that the UE is receiving, in the cell #1, the broadcast service corresponding to the video streaming service #1. In this case, the RAN #2 may feed back, to the RAN #1 based on the second information, the RAN-visible application layer metric that the RAN #2 expects to receive. Then, the RAN #1 sends the RAN-visible application layer metric (for example, the rebuffering) to the UE. The upper layer of the access stratum of the UE performs a measurement for the RAN-visible application layer metric. Alternatively, the RAN #1 forwards the second information to the RAN #2, where the second information indicates that the UE is receiving the first broadcast service in the cell #1. In this case, the RAN #2 may feed back, to the RAN #1 based on the second information, the RAN-visible application layer metric that the RAN #2 expects to receive. The RAN #1 sends the RAN-visible application layer metric (for example, the rebuffering) to the UE. Then, the RAN #1 sends the second configuration information to the access stratum of the UE. The UE determines whether to report the measurement result.

In an implementation, before or after step S410 is performed, the method includes the following step S409. To be specific, the UE may report, to the RAN #1, whether the UE is receiving the first broadcast service in the current serving cell, and the RAN #1 may determine to start or cancel a RAN-visible application layer measurement in the serving cell, to avoid a case in which the RAN #1 does not know a specific cell corresponding to the received measurement result.

S409: The terminal device sends the third information to the first network device. Correspondingly, the first network device receives the third information from the terminal device.

In an implementation, the third information indicates that the UE is receiving the first broadcast service in the serving cell, or indicates that the UE expects to receive the first broadcast service in the serving cell. Optionally, the third information includes the identifier of the first broadcast service and/or the identity of the serving cell.

For example, the third information indicates that the UE is receiving the first broadcast service, for example, the broadcast service corresponding to the audio streaming service #1, in the cell #1 (for example, the cell managed by the RAN #1), and the third information may include the identity of the cell #1 and/or the identifier of the broadcast service corresponding to the audio streaming service #1. Correspondingly, the RAN #1 may send a RAN-visible application layer metric (for example, the rebuffering) to the access stratum of the UE based on the third information, to indicate the UE to perform a measurement for the rebuffering of the broadcast service corresponding to the audio streaming service #1 in the serving cell. Alternatively, the third information indicates that the UE expects to receive, in the cell #1, the broadcast service corresponding to the video streaming service #1, and the third information may include the identity of the cell #1 and/or the identifier of the broadcast service corresponding to the video streaming service #1. Correspondingly, the RAN #1 may send a RAN-visible application layer metric (for example, the playout delay) to the access stratum of the UE based on the third information, to indicate the UE to perform a measurement for the playout delay of the broadcast service corresponding to the video streaming service #1 in the serving cell.

In another implementation, the third information indicates that the UE is not receiving the first broadcast service in the serving cell, or indicates that the UE does not expect to receive the first broadcast service in the serving cell. Optionally, the third information includes the identifier of the first broadcast service and/or the identity of the serving cell. Correspondingly, the RAN #1 does not indicate the UE to perform an application layer measurement on the first broadcast service for a RAN-visible application layer metric in the serving cell.

In an embodiment corresponding to S409, the terminal device sends the measurement result to the first network device in S430, and may not need to send the indication information #2. In an implementation, after obtaining the measurement result, the RAN #1, the RAN #2, or the RAN #3 may send the measurement result to the MCE. For example, the RAN #1 can determine, based on a correspondence that is between an application layer measurement identifier and a QoE reference and that is carried in the QoE measurement collection configuration information received in step S410 and the application layer measurement identifier reported by the UE in step S430, a QoE reference corresponding to the application layer measurement result. Further, the RAN #1 finds the IP address of the corresponding MCE based on the QoE reference, to send, to the MCE, the measurement result that is received from the UE. Alternatively, the RAN #1 obtains a corresponding application layer measurement configuration based on the application layer measurement identifier reported by the UE in step S430, and then obtains, based on the QoE measurement collection configuration information received in step S410, the IP address of the MCE corresponding to the application layer measurement result, to send, to the MCE, the measurement result that is received from the UE.

Optionally, after obtaining the measurement result and the indication information #2, the RAN #1 may send the measurement result and the indication information #2 to the MCE. When the QoE measurement collection configuration information further includes the MDT alignment information, after entering the RRC_CONNECTED state from the RRC_IDLE/INACTIVE state, the UE may further send the MDT measurement result to the RAN #1 or another network device, where the MDT measurement result carries a cell identity and a radio signal measurement result of the UE in a cell corresponding to the cell identity. The RAN #1 or the another network device that receives the MDT measurement result sends the MDT measurement result to a collection entity, for example, a trace collection entity (trace collection entity, TCE), of the MDT measurement result. In this way, the MCE and the TCE can obtain the correlation between the application layer measurement result and the MDT measurement result based on the indication information #2 corresponding to the application measurement result and the cell identity and the cell measurement result in the MDT measurement result, so that a correlation between the application layer measurement result and quality of a radio access side signal received by the terminal device can be obtained.

In the technical solution provided in this application, the terminal device includes the indication information when reporting the application layer measurement result to the first network device, where the indication information indicates the first cell in which the terminal device receives the first broadcast service, so that the network device corresponding to the first cell can perform targeted optimization on a configuration of the first broadcast service based on the measurement result, to improve performance of the first broadcast service, and therefore improve network communication quality and user experience.

The foregoing describes the method embodiments in embodiments of this application with reference to the accompanying drawings, and the following describes apparatus embodiments in embodiments of this application. It may be understood that the descriptions of the method embodiments and descriptions of the apparatus embodiments may correspond to each other. Therefore, for parts that are not described, refer to the foregoing method embodiments.

The foregoing mainly describes the solutions provided in embodiments of this application from a perspective of interaction between network elements. It may be understood that, to implement the foregoing functions, each network element, for example, a transmit-end device or a receive-end device, includes a corresponding hardware structure and/or software module for performing each function. A person skilled in the art may be aware that, with reference to the units and algorithm steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the transmit-end device or the receive-end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into modules is an example, and is merely a logical function division. In an actual implementation, another division manner may be used. An example in which each functional module is obtained through division based on each corresponding function is used below for description.

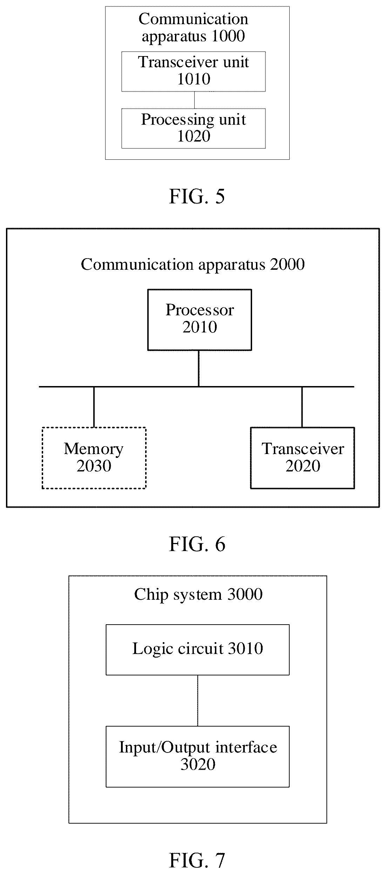

FIG. 5 is a schematic block diagram of a communication apparatus 1000 according to an embodiment of this application. As shown in FIG. 5, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a receiving/sending unit.

In a possible design, the apparatus 1000 may implement steps or procedures performed by the terminal device in the foregoing method embodiments. The processing unit 1020 is configured to perform a processing-related operation of the terminal device in the foregoing method embodiments. The transceiver unit 1010 is configured to perform a receiving/sending-related operation of the terminal device in the foregoing method embodiments.

For example, the transceiver unit 1010 is configured to obtain first configuration information. The processing unit 1020 is configured to perform an application layer measurement on a first broadcast service based on the first configuration information, to obtain a measurement result. The transceiver unit 1010 is further configured to send the measurement result and indication information to a first network device, where the indication information indicates a first cell in which the terminal device receives the first broadcast service.

In another possible design, the apparatus 1000 may implement steps or procedures performed by the first network device in the foregoing method embodiments. The processing unit 1020 is configured to perform a processing-related operation of the first network device in the foregoing method embodiments. The transceiver unit 1010 is configured to perform a receiving/sending-related operation of the first network device in the foregoing method embodiments.

For example, the transceiver unit 1010 is configured to send first configuration information to a terminal device. The transceiver unit 1010 is further configured to receive a measurement result and indication information from the terminal device, where the measurement result is obtained through an application layer measurement that is performed on a first broadcast service based on the first configuration information, and the indication information indicates a first cell in which the terminal device receives the first broadcast service.

It should be understood that the device 1000 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described function. In an optional example, a person skilled in the art can understand that the device 1000 may be specifically the transmitting end in the foregoing embodiments, and may be configured to perform the procedures and/or steps corresponding to the transmitting end in the foregoing method embodiments; or the device 1000 may be specifically the receiving end in the foregoing embodiments, and may be configured to perform the procedures and/or steps corresponding to the receiving end in the foregoing method embodiments. To avoid repetition, details are not described herein again.

The device 1000 in the foregoing solutions has a function of implementing the corresponding steps performed by the transmitting end in the foregoing methods. Alternatively, the device 1000 in the foregoing solutions has a function of implementing the corresponding steps performed by the receiving end in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 5 may be the receiving end or the transmitting end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 6 is a schematic block diagram of a communication apparatus 2000 according to an embodiment of this application. As shown in FIG. 6, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through an internal connection path. The memory 2030 is configured to store instructions, and the processor 2010 may execute the instructions stored in the memory 2030.

In a possible implementation, the apparatus 2000 is configured to implement the procedures and steps corresponding to the terminal device in the foregoing method embodiments.

For example, the transceiver 2020 is configured to obtain first configuration information. The processor 2010 is configured to perform an application layer measurement on a first broadcast service based on the first configuration information, to obtain a measurement result. The transceiver 2020 is further configured to send the measurement result and indication information to a first network device, where the indication information indicates a first cell in which the terminal device receives the first broadcast service.

In another possible implementation, the apparatus 2000 is configured to implement the procedures and the steps corresponding to the first network device in the foregoing method embodiments.

For example, the transceiver 2020 is configured to send first configuration information to a terminal device. The transceiver 2020 is further configured to receive a measurement result and indication information from the terminal device, where the measurement result is obtained through an application layer measurement that is performed on a first broadcast service based on the first configuration information, and the indication information indicates a first cell in which the terminal device receives the first broadcast service.

It should be understood that the device 2000 may be specifically the transmitting end or the receiving end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmitting end or the receiving end in the foregoing method embodiments.

Optionally, the memory 2030 may include a read-only memory and a random access memory, and provide instructions and data to the processor. A part of the memory may further include a nonvolatile random access memory. For example, the memory may further store information about a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmitting end or the receiving end.

In an implementation process, the steps in the foregoing methods may be implemented by using a hardware integrated logic circuit in the processor or by using instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description rather than a limitative description, many forms of RAMs may be used, for example, a static random access memory (static RAM, SRAM), a dynamic random access memory (dynamic RAM, DRAM), and a synchronous dynamic random access memory (synchronous DRAM, SDRAM). It should be noted that the memory in the systems and methods described in this specification includes but is not limited to these memories and any memory of another appropriate type.

FIG. 7 is a schematic block diagram of a chip system 3000 according to an embodiment of this application. As shown in FIG. 7, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement the operations performed by the terminal device in the foregoing method embodiments.

For example, the logic circuit 3010 is configured to implement processing-related operations performed by the terminal device in the foregoing method embodiments, for example, processing-related operations performed by the terminal device in the embodiment shown in FIG. 4. The input/output interface 3020 is configured to implement sending and/or receiving-related operations performed by the terminal device in the foregoing method embodiments, for example, sending and/or receiving-related operations performed by the terminal device in the embodiment shown in FIG. 4.

An embodiment of this application further provides a computer-readable storage medium. The computer-readable storage medium stores computer instructions for implementing all or some of the steps of the methods performed by the terminal device or the first network device in the foregoing method embodiments. The storage medium in this application includes any medium that can store program code, for example, a USB flash disk, a removable hard disk, a read-only memory, a random access memory, a magnetic disk, or an optical disc.

An embodiment of this application further provides a computer program product, including instructions. When the instructions are executed by a computer, the methods performed by the terminal device and the first network device in the foregoing method embodiments are implemented.

An embodiment of this application further provides a communication system. The communication system includes the first network device and the second network device in the foregoing embodiments. Optionally, the communication system includes the terminal device in the foregoing embodiments.

For explanations and beneficial effects of related content in any one of the apparatuses provided above, refer to the corresponding method embodiment provided above. Details are not described herein again.

A person of ordinary skill in the art may be aware that, with reference to the units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected based on actual conditions to achieve the objectives of the solutions in embodiments.

In addition, the functional units in embodiments of this application may be integrated into one processing unit, each of the units may exist alone physically, or two or more units may be integrated into one unit.

## Claims

1. A communication method, wherein the method comprises:
obtaining first configuration information;
performing an application layer measurement on a first broadcast service based on the first configuration information, to obtain a measurement result; and
sending the measurement result and indication information to a first network device, wherein the indication information indicates a first cell in which a terminal device receives the first broadcast service.

2. The method according to claim 1, wherein the measurement result comprises a measurement result corresponding to at least one access network RAN-visible application layer metric.

3. The method according to claim 1 or 2, wherein the method further comprises:
sending an identifier of the first broadcast service to the first network device.

4. The method according to any one of claims 1 to 3, wherein the method further comprises:
receiving second configuration information, wherein the second configuration information comprises at least one of the following: at least one cell identity, at least one broadcast service identifier, or at least one access network RAN-visible application layer metric.

5. The method according to claim 4, wherein the sending the measurement result and the indication information to the first network device comprises:
sending the measurement result and the indication information to the first network device when the at least one broadcast service identifier carried in the second measurement configuration information comprises the identifier that is of the first broadcast service and that is received by an access stratum of the terminal device from an upper layer of the access stratum of the terminal device.

6. The method according to claim 4 or 5, wherein the sending the measurement result and the indication information to the first network device comprises:
sending the measurement result and the indication information to the first network device when a cell corresponding to the at least one cell identity carried in the second measurement configuration information comprises the first cell.

7. The method according to at least one of claims 4 to 6, wherein the sending the measurement result and the indication information to the first network device comprises:
sending the measurement result and the indication information to the first network device when the RAN-visible application layer metric carried in the second measurement configuration information comprises the RAN-visible application layer metric corresponding to the measurement result.

8. The method according to any one of claims 1 to 7, wherein the method further comprises:
receiving first information from the first network device, wherein the first information indicates the terminal device to modify or cancel the application layer measurement.

9. The method according to any one of claims 1 to 8, wherein the obtaining the first configuration information comprises:
receiving the first configuration information from the first network device or a second network device, wherein the first configuration information comprises a RAN-visible application layer metric, and the RAN-visible application layer metric corresponds to the measurement result.

10. The method according to any one of claims 4 to 9, wherein the receiving the second configuration information comprises:
receiving the second configuration information from a network device corresponding to the first cell.

11. The method according to any one of claims 1 to 10, wherein the method further comprises:
sending second information to the first network device, wherein the second information indicates that the terminal device expects to receive the first broadcast service in at least one cell, or indicates that the terminal device is receiving the first broadcast service in a second cell.

12. The method according to claim 11, wherein
when the second information indicates that the terminal device expects to receive the first broadcast service in the at least one cell, the second information comprises an identity of the at least one cell and/or the identifier of the first broadcast service; or
when the second information indicates that the terminal device is receiving the first broadcast service in the second cell, the second information comprises an identity of the second cell and/or the identifier of the first broadcast service.

13. The method according to any one of claims 1 to 10, wherein the method further comprises:
sending third information to the first network device, wherein the third information indicates that the terminal device is receiving the first broadcast service in a serving cell, or indicates that the terminal device expects to receive the first broadcast service in a serving cell.

14. The method according to claim 13, wherein the third information comprises the identifier of the first broadcast service and/or an identity of the serving cell.

15. A communication method, wherein the method comprises:
sending first configuration information to a terminal device; and
receiving a measurement result and indication information from the terminal device, wherein the measurement result is obtained through an application layer measurement that is performed on a first broadcast service based on the first configuration information, and the indication information indicates a first cell in which the terminal device receives the first broadcast service.

16. The method according to claim 15, wherein the measurement result comprises a measurement result corresponding to at least one access network RAN-visible application layer metric.

17. The method according to claim 15 or 16, wherein the method further comprises:
sending second configuration information to the terminal device, wherein the second configuration information comprises at least one of the following: at least one cell identity, at least one broadcast service identifier, or at least one RAN-visible application layer metric.

18. The method according to claim 17, wherein the method further comprises:
receiving third configuration information from a second network device, wherein the third configuration information comprises the at least one of the following: at least one cell identity, at least one broadcast service identifier, or at least one RAN-visible application layer metric; and the third configuration information is comprised in the second configuration information.

19. The method according to claim 18, wherein the method further comprises:
sending the measurement result to the second network device when the first cell is a neighboring cell of a serving cell of the terminal device.

20. The method according to claim 19, wherein the sending the measurement result to the second network device comprises:
sending the measurement result to the second network device when the at least one broadcast service identifier carried in the third configuration information comprises an identifier that is of the first broadcast service and that is received from the terminal device.

21. The method according to claim 19 or 20, wherein the sending the measurement result to the second network device comprises:
sending the measurement result to the second network device when a cell corresponding to the at least one cell identity carried in the third configuration information comprises the first cell.

22. The method according to any one of claims 19 to 21, wherein the sending the measurement result to the second network device comprises:
sending the measurement result to the second network device when the RAN-visible application layer metric carried in the third configuration information comprises the RAN-visible application layer metric corresponding to the measurement result.

23. The method according to any one of claims 15 to 22, wherein the method further comprises:
sending first information to the terminal device, wherein the first information indicates the terminal device to modify or cancel the application layer measurement.

24. The method according to any one of claims 15 to 23, wherein the method further comprises:
receiving second information from the terminal device, wherein the second information indicates that the terminal device expects to receive the first broadcast service in at least one cell, or indicates that the terminal device is receiving the first broadcast service in a second cell.

25. The method according to claim 24, wherein
when the second information indicates that the terminal device expects to receive the first broadcast service in the at least one cell, the second information comprises an identity of the at least one cell and/or the identifier of the first broadcast service; or
when the second information indicates that the terminal device is receiving the first broadcast service in the second cell, the second information comprises an identity of the second cell and/or the identifier of the first broadcast service.

26. The method according to any one of claims 15 to 23, wherein the method further comprises:
receiving third information from the terminal device, wherein the third information indicates that the terminal device is receiving the first broadcast service in the serving cell, or the third information indicates that the terminal device expects to receive the first broadcast service in the serving cell.

27. The method according to claim 26, wherein the third information comprises the identifier of the first broadcast service and/or an identity of the serving cell.

28. A communication apparatus, comprising a module or a unit configured to perform the method according to any one of claims 1 to 14.

29. A communication apparatus, comprising a module or a unit configured to perform the method according to any one of claims 15 to 27.

30. A communication apparatus, wherein the apparatus comprises a processor, the processor is coupled to a memory, and the memory stores instructions; and when the instructions are run by the processor, the processor is enabled to perform the method according to any one of claims 1 to 14.

31. A communication apparatus, wherein the apparatus comprises a processor, the processor is coupled to a memory, and the memory stores instructions; and when the instructions are run by the processor, the processor is enabled to perform the method according to any one of claims 15 to 27.

32. A communication apparatus, comprising a processor, wherein the processor is configured to execute a computer program or instructions, to enable the apparatus to perform the method according to any one of claims 1 to 14, or enable the apparatus to perform the method according to any one of claims 15 to 27.

33. A communication system, comprising a communication apparatus for performing the method according to any one of claims 1 to 14 and/or a communication apparatus for performing the method according to any one of claims 15 to 27.

34. A computer-readable storage medium, wherein the computer-readable storage medium is configured to store a computer program; and when the computer program is run on a computer, the computer is enabled to perform the method according to any one of claims 1 to 14, or the computer is enabled to perform the method according to any one of claims 15 to 27.

35. A chip system, comprising a processor, configured to invoke a computer program from a memory and run the computer program, to enable a communication device in which the chip system is installed to perform the method according to any one of claims 1 to 14, or enable a communication device in which the chip system is installed to perform the method according to any one of claims 15 to 27.

36. A computer program product, wherein the computer program product comprises instructions run by a processor that are for performing the method according to any one of claims 1 to 14, or comprises instructions run by a processor that are for performing the method according to any one of claims 15 to 27.
